# EUROPEAN PATENT APPLICATION

(11) **EP 2 113 765 A1**
(43) Date of publication of application: **04.11.2009**
(21) Application number: 08155566.6
(22) Date of filing: 02.05.2008
(51) Int. Cl.: G01N 17/00

(54) **Corrosion monitoring**

(71) Applicant: Nederlandse Organisatie voor toegepast-natuurwetenschappelijk onderzoek TNO, 2628 VK Delft (NL)
(72) Inventor: Mast, Arjan, 3071 NB Rotterdam (NL); Papp, Zoltan, 2625 LL Delft (NL); Volker, Arno Willem Frederik, 2622 KN Delft (NL)
(74) Representative: Hatzmann, Martin

(57) **Abstract**

A system (100) for corrosion monitoring comprises first ultrasonic transducer units (4) for transmitting ultrasonic waves along a surface (3) of an object (2), second ultrasonic transducer units (5) for receiving the transmitted ultrasonic waves, and a corrosion detection device (1) for processing transducer signals to detect corrosion of the surface (3) and for communicating corrosion data derived from the transducer signals to a remote station (20). The system (100) is arranged for communicating the corrosion data only if the detected corrosion change exceeds a threshold, thus saving energy if no corrosion change is detected.

## Description

The present invention relates to corrosion monitoring. More in particular, the present invention relates to a method of and a device for corrosion monitoring while allowing communication of corrosion data to a station external to the device, such as a remote monitoring station.

It is well known to use ultrasonic waves to obtain information on the surfaces of an object, for example a pole or pipe. United States Patent US 5 965 818, for example, discloses a method using ultrasonic Lamb waves to measure reduction of wall thickness due to localised corrosion at pipe supports. Two transducers are used to make a Lamb wave travel along the pipe wall in the circumferential direction. By comparing measured time-of-flight data the change in time-of-flight due to corrosion can be quantified. The transducers of corrosion monitoring devices of the type disclosed in US 5 965 818 are typically mounted on the object to be monitored, while the actual corrosion detection device (including a transducer signal processing unit) is located in the immediate vicinity of the object and is connected to the transducers by wires. When buried pipes are to be monitored, the wire connections will necessarily be much longer than in the setting presented in US 5 965 818.

United States Patent Application US 2005/145018 discloses a wireless sensor system installed inside pipelines. This known system uses wireless sensors and receivers which are controlled by base stations mounted in the pipeline. The sensors take measurements periodically or continuously and the resulting sensor data are transmitted inside the pipe and forwarded, via the base stations in the pipeline, to a remote computer which serves as a monitoring station. To reduce the power consumption of the sensor units, US 2005/145018 suggests "hopping" the sensor data from one sensor unit to another towards the base stations, instead of transmitting directly to the base stations. Still, all sensor data are transmitted to the remote computer.

The base stations, which are mounted in openings in the pipe, serve as access points for transmitting the sensor data to a remote computer. In case the pipe is buried, these base stations are buried too. Obviously, the battery life of these base stations is very important to the proper functioning of the device. However, above-mentioned US 2005/145018 is silent on the way energy may be saved in the base stations and it can therefore be assumed that these known base stations are battery powered and work continuously. It will be clear that continuously working base stations use a considerable amount of energy, requiring a frequent replacement of their batteries. Given the typical locations of the base stations, such a replacement is difficult and costly.

It is an object of the present invention to overcome these and other problems of the Prior Art and to provide a corrosion detection device and system which save more energy, thus providing a significantly improved battery life.

Accordingly, the present invention provides a corrosion detection device comprising:
- a processing unit for processing transducer signals received from transducer units to detect corrosion of a surface and for producing corresponding corrosion data, and
- a communication unit for communicating the corrosion data to a remote station,
which corrosion detection device is arranged for communicating the corrosion data only if the detected corrosion exceeds a threshold.

By communicating the corrosion data only if the detected corrosion exceeds a threshold, the amount of data transmitted to the remote station can be significantly reduced. As a result, the power consumption of the device is also significantly reduced and its battery life is increased. In particular when it is difficult to access the corrosion monitoring device, for example when the device is buried or in a remote location, the reduced power consumption provided by the present invention is beneficial. Energy is saved if no corrosion change is detected.

It is preferred that the communication unit is only activated when the detected corrosion exceeds the threshold, thus increasing the amount of power saved. However, the communication unit may be permanently on stand-by, or be permanently or periodically activated, in particular when the communication unit additionally serves to receive the transducer signals. In some embodiments, a separate transmission unit may be provided for transmitting and/or receiving transducer signals, which transmission unit preferably is activated only periodically. In either case, the activation and inactivation is preferably carried out by the processing unit, which accordingly may be arranged for activating the communication unit only if the detected corrosion exceeds a threshold.

The corrosion data represent the extent of the corrosion, if any, of the surface concerned. In some cases the corrosion data will represent the absence of corrosion, while in other cases the corrosion data will represent, for example, the surface height difference caused by the corrosion.

The term "detected corrosion" preferably refers to an absolute extent of the detected corrosion, for example a height difference measured in millimetres, but may also refer to a relative extent of the corrosion, for example the change in the height difference relative to a previous communication of the corrosion data. If no corrosion is detected, the detected corrosion may be said to be equal to zero and the corrosion data will represent this value.

The threshold is preferably predetermined, that is, be set to a certain value before the corrosion detection process begins. However, the threshold may also be determined during use, for example periodically. In some embodiments, the threshold may be adapted dynamically, depending on the detected corrosion, and may be adjusted so as to gradually increase the number of communications as the detected corrosion increases.

The corrosion change may be detected in various manners. It is preferred that the processing unit is arranged for detecting a change in properties of the received transducer signals. Various properties may be used for this purpose, but it is particularly preferred that the processing unit is arranged for detecting a phase change of the transducer signals. A phase change is easier to detect than, for example, an amplitude change and provides more reliable information. The phase change can be derived directly from the transducer signals, for example by correlating newly and previously received signals, or can be derived from an instantaneous phase which may be determined using the Hilbert transform, which is well known in the art.

In some embodiments, the processing unit may first derive properties of the (received) transducer signals and then compare these properties with stored values to determine any change in the detected corrosion. However, it is preferred that the processing unit is arranged for detecting a phase change of the received transducer signals by correlating newly received transducer signals and previously received transducer signals, as mentioned above. That is, the processing unit preferably uses the received transducer signals (preferably in digital form), both recent and stored, to detect a (phase) change, instead of first deriving the phase of transducer signals received at different points in time and then comparing their phase properties. Using the (digitised) signals directly significantly reduces the processing effort involved, and hence also reduces the power consumption of the device.

Each corrosion detection device may individually communicating its corrosion data to a or the remote station. However, in an advantageous embodiment the communication unit is arranged for relaying corrosion data via other corrosion detection devices to the remote station. In this embodiment, the communication units are arranged for receiving and forwarding the corrosion data from other devices. As the (relaying) distance between the devices typically is much smaller than the distance between a device and the remote station, less transmission power is required when relaying and hence power is saved. This is particularly true when the communication unit is arranged for wireless communication. If the transducer units constitute a sensor network, this preferably is a wireless sensor network.

The corrosion detection device of the present invention may further comprise a transmission unit for transmitting transducer signals to first transducer units and receiving transducer signals from second transducer units. The transmission unit produces (first) transducer signals which are sent to the first transducer unit(s), which convert these signals into, for example, ultrasonic waves which travel along the surface and are detected by the second transducer unit(s), where they are converted into (second) transducer signals.

It is preferred that the transmission unit is arranged for causing the first transducer units to periodically transmit ultrasonic waves. The period is chosen suitably so as to allow a regular determination of the corrosion, if any, while using the battery powering the device as efficiently as possible. A time period between ultrasonic transmissions is preferably determined in dependence on the corrosion data: as the extent of the corrosion increases, the surface may be examined more often by reducing the time period between the ultrasonic waves or sets of ultrasonic waves. The actual period or interval used may depend on the circumstances, for example the location and accessibility, the age and condition of the object being monitored, the environment, and other factors.

The corrosion detection device may comprise at least one battery. However, the battery or batteries may also be external to the device.

Although the present invention is preferably carried out by transmitting ultrasonic waves along a surface of an object, the present invention also envisages transmitting ultrasonic waves towards the object to be monitored, as in United States Patent US 3 930 404, for example.

In addition to the corrosion detection device discussed above, the present invention also provides a corrosion detection system comprising:
- one or more first ultrasonic transducer units for transmitting ultrasonic waves along a surface of an object,
- one or more second ultrasonic transducer units for receiving the transmitted ultrasonic waves and for producing corresponding transducer signals, and
- a corrosion detection device as defined above.
In the corrosion detection system of the present invention, the corrosion detection device is arranged for communicating the corrosion data only if the detected corrosion exceeds a threshold.

The present invention further provides a system for corrosion monitoring, comprising at least one corrosion detection system and/or corrosion detection device as defined above, as well as at least one remote station for receiving and monitoring corrosion data.

The present invention still further provides a method of corrosion detection, the method comprising the steps of:
- transmitting ultrasonic waves, from first ultrasonic transducer units to second ultrasonic transducer units, along a surface of an object,
- processing transducer signals to detect corrosion of the surface, and
- communicating corrosion data to a remote station,
wherein the step of communicating the corrosion data is carried out only if the detected corrosion exceeds a threshold.

In the method of the present invention, the processing step may involve detecting a change in properties of the received transducer signals. The sub-step of detecting a change in properties may involve detecting a phase change by correlating newly received transducer signals and previously received transducer signals, said transducer signals preferably representing ultrasonic waves.

In an alternative embodiment of the method of the present invention, the step of communicating the corrosion data is carried out only if the detected corrosion change exceeds a threshold. That is, the criterion for communicating the corrosion data may be incremental corrosion instead of, or in addition to, absolute corrosion.

The present invention additionally provides a computer program product for carrying out the processing step in the method defined above. A computer program product may comprise a set of computer executable instructions stored on a data carrier, such as a CD or a DVD. The set of computer executable instructions, which allow a programmable computer to carry out the method as defined above, may also be available for downloading from a remote server, for example via the Internet.

The present invention will further be explained below with reference to exemplary embodiments illustrated in the accompanying drawings, in which:
Fig. 1 schematically shows an object of which a surface is monitored in accordance with the present invention.
Fig. 2 schematically shows a first embodiment of a corrosion monitoring system according to the present invention.
Fig. 3 schematically shows a second embodiment of a corrosion monitoring system according to the present invention.
Fig. 4 schematically shows a corrosion monitoring device according to the present invention.

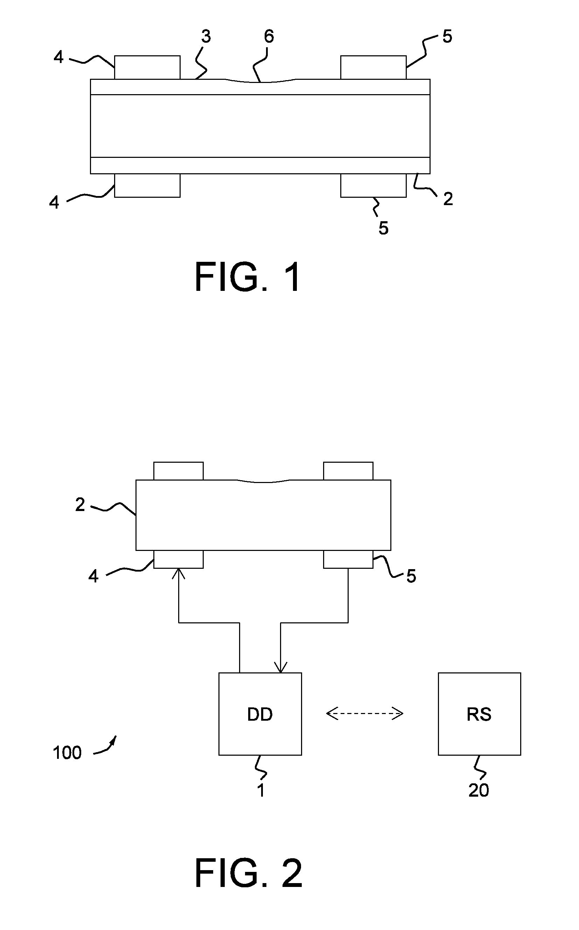

The pipe 2 shown merely by way of non-limiting example in Fig. 1 comprises a surface 3 which is to be monitored. In the example shown, the surface 3 has a recessed section 6 which may be caused by corrosion, for example. By suitably monitoring the surface 3, the existence and growth of the recessed section 6 may be detected.

First transducer units 4 and second transducer units 5 are mounted on the pipe 2, on either side of the surface 3. Although both the first and the second transducer units may be capable of transmitting and receiving ultrasonic waves, in the present invention the first transducer units 4 are used for transmitting ultrasonic pulsed waves while the second transducer units 5 are used for receiving these waves. The transducer units may be known *per se* and may be piezo-electric units.

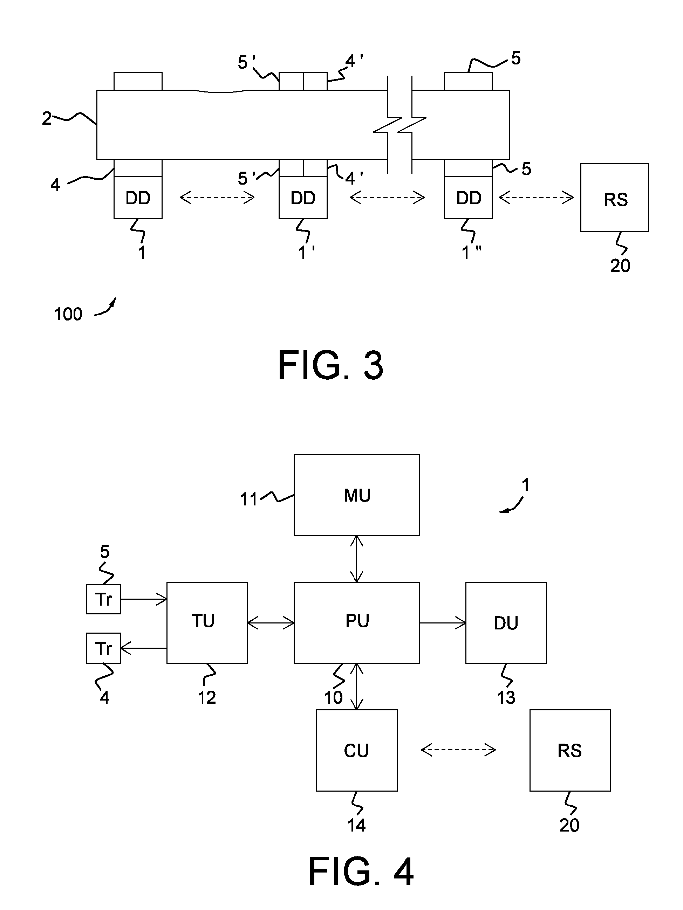

The ultrasonic waves or produced by the first transducers 4 preferably have a defined duration of, for example, several µs (microseconds). The actual duration may depend on the particular application, for example the dimensions and mutual distances of the transducer units. The number of transducers may vary. At least one first transducer 4 and at least one second transducer 5 should be provided, although it is preferred to use multiple second transducers 5, for example two, three, four, eight of more second transducers 5. Using a plurality of second transducers 5 results in a plurality of paths travelled by the ultrasonic waves and hence an improved monitoring of the surface. Similarly, it is preferred to use more than one first transducer 4. In the example of Figs. 2 and 3, eight first transducers 4 and eight second transducers 5 are used, although the invention is not limited to these particular numbers. The transducers of a plurality of first and/or second transducers are preferably evenly spaced in the longitudinal direction of the object, although this is not essential. When monitoring the corrosion of pipes, sets of transducers may be accommodated on rings arranged around the pipes. The transducers of each set may be evenly spaced around the ring, and the rings may in turn be evenly spaced along the pipe, although this is not essential.

The transducers 4 and 5 are connected to a corrosion detection device (not shown in Fig. 1), either via wires or via wireless connections. In some embodiments, the transducer units constitute a sensor network in which the transducer data may be relayed via the various sensor units to the corrosion detection device.

The corrosion detection device serves to detect any corrosion (such as the corroded recess 6 shown in Fig. 1) and, more in particular, any change in the corrosion, using the signals produced by the (second) transducers. The corrosion detection device sends data representing any corrosion and/or any corrosion change to a (remote monitoring) device, which may log the corrosion (change) over a period of time and which may produce an appropriate alert if the corrosion reaches a certain state (e.g. extent and/or height).

In order to conserve energy, it is preferred that the transducer units are used only periodically, not continuously. The intervals between the active periods of the transducers may be chosen in according to circumstances, and may decrease if corrosion, or an increasing corrosion change, is detected.

A first embodiment of a corrosion monitoring system 100 according to the present invention is schematically illustrated in Fig. 2. The system 100 comprises a detection device (DD) 1, transducers unit 4 and 5 and a remote station (RS) 20. The detection device 1 is electrically or optically coupled (by wires or fibres, as illustrated, or wirelessly) with the first transducer units 4 and second transducer units 5 which are mounted on the object 2. The (corrosion) detection device 1 is capable of communicating wirelessly with the remote station 20, which serves to monitor any corrosion of the object 2.

The detection device 1 causes the first transducer unit(s) 4 to produce test signals, preferably constituted by ultrasonic waves, which travel along the surface of the object 2 and are detected by the second transducer unit(s) 5. The detection device 1 detects any corrosion of the object 2 and if this detected corrosion exceeds a certain threshold, the detection device 1 communicates corrosion data indicative of the detected corrosion to the remote station 20, which may further process the corrosion data. Optionally, the remote station 20 may send data, such as control data, to the detection device 1. Such control data could, for example, set or adjust the said threshold.

In the embodiment of Fig. 2, the detection device 1 communicates directly with the remote station 20. In other embodiments, however, indirect communication using relaying is provided, thus reducing the transmission power required.

A second embodiment of a corrosion monitoring system according to the present invention is schematically illustrated in Fig. 3. The system of Fig. 3 also comprises a detection device (DD) 1, transducer units 4 & 5 mounted on an object 2, and a remote station 20, as in Fig. 2, but further comprises a second detection device 1' and a third detection device 1". The detection devices 1, 1' and 1" are spaced along the object 2 and are capable of relaying data, preferably wirelessly, to the remote station 20 and preferably also in the reverse direction. This allows the detection devices to communicate the corrosion data over significantly smaller distances than in the embodiment of Fig. 2, thus saving power.

In the example of Fig. 3, detection device 1' is coupled with a combined transducer unit, consisting of both a second transducer 5' and a first transducer 4', so as to receive test signals (e.g. ultrasonic waves) from the first transducer 4 of the first detection device 1, and to transmit test signals to the second transducer 5 of the third detection device 1".

A merely exemplary embodiment of a corrosion detection device according to the present invention is schematically illustrated in Fig. 4. The device 1 comprises a processing unit (PU) 10, a memory unit (11), a transmission unit (TU) 12, an (optional) display unit (DU) 13 and a communication unit (CU) 14. The device 1 may further comprise a battery unit (not shown), although a battery unit may also be external to the device 1.

The processing unit 10 preferably comprises a microprocessor capable of executing instructions of a software programme embodying method steps of the present invention. The memory unit 11 may store this software programme as well as corrosion data and other data.

The transmission unit 12 is capable of producing, under control of the processing unit 10, transmission signals which are fed to the first transducer(s) 4. In addition, the transmission unit 12 is capable of receiving detection signals produced by the second transducer(s) 5 and feeding suitable detection information to the processing unit 10.

The transmission unit 12 may be arranged for wireless communication with the transducers 4 and 5, for example using radio frequency (RF) communication or infrared communication. The processing unit 10 may additionally be arranged for detecting a signal property change of the ultrasonic signals, such as a phase change. Suitable programme steps for phase detection may be stored in the memory unit 11. The phase detection is preferably based on correlation of transducer signals, such as the most recent and earlier (stored) signals, but may also use an instantaneous phase determined using the Hilbert transform. Preferably a dispersion correction is carried out in the frequency domain to better determine the arrival times of test signals, such as ultrasonic waves (e.g. Lamb waves). A dispersion correction additionally makes the test signals less susceptible to uniform temperature drift and any delays.

It is also possible to estimate signal properties, such as the phase, in the frequency domain. By detecting in two or more different frequency bands a distinction can be made between signal property changes caused by temperature effects and those caused by wall thickness or (relative) surface height effects.

The optional display unit 13 may comprise a display screen capable of displaying corrosion data and data indicative of the status of the device. The communication unit 14 is capable of communicating with a remote station (RS) 20, which remote station serves as a corrosion monitoring station. The remote station 20 may be constituted by a general purpose computer or any other suitable device.

Preferably, the communication unit 14 communicates wirelessly with the remote station 20, using RF communication. In accordance with the present invention, the communication unit 14 only transmits corrosion data if a detected corrosion change exceeds a threshold. This threshold may be predetermined but may also be adaptable to the particular circumstances, such as the nature and the location of the object being monitored.

A suitable threshold may be a 5% or 10% corrosion increase in a certain, preferably predetermined, period. The processing unit 10 may execute suitable programme steps for deriving corrosion data from the transducer signals, for comparing recent corrosion data with earlier corrosion data so as to determine a corrosion change, and for comparing the corrosion change with a threshold value. Suitable comparison algorithms may be used.

The communication unit 14 is preferably only activated when the corrosion change exceeds the threshold, and is normally either switched off or in stand-by mode.

It is noted that in some embodiments, the transducer units 4 and 5 may not be part of the actual device 1 but may be provided separately. Together with the remote station 20, the device 1 shown in Fig. 2 constitutes a corrosion monitoring system according to the present invention.

The present invention is based upon the insight that corrosion data need only be communicated when corrosion is first detected, or if corrosion progresses. When no corrosion is detected, no data need to be transmitted. The present invention benefits from the further insight that energy savings can be made by transmitting data only when necessary, and from the insight that detecting a phase shift of transducer signals provides a reliable indication of a change of the wall thickness and/or surface height of an object.

It is noted that any terms used in this document should not be construed so as to limit the scope of the present invention. In particular, the words "comprise(s)" and "comprising" are not meant to exclude any elements not specifically stated. Single (circuit) elements may be substituted with multiple (circuit) elements or with their equivalents. The present invention is not limited to corrosion monitoring but generally applies to surface monitoring and may also be used to detect punctures or other defects not caused by corrosion but by, for example, puncturing with another object.

It will be understood by those skilled in the art that the present invention is not limited to the embodiments illustrated above and that many modifications and additions may be made without departing from the scope of the invention as defined in the appending claims.

## Claims

1. A corrosion detection device (1) comprising:
• a processing unit (10) for processing transducer signals received from transducer units (5) to detect corrosion of a surface (6) and for producing corresponding corrosion data, and
• a communication unit (14) for communicating the corrosion data to a remote station (20),
which corrosion detection device is arranged for communicating the corrosion data only if the detected corrosion exceeds a threshold.

2. The device according to claim 1, wherein the threshold is predetermined.

3. The device according to claim 1 or 2, wherein the processing unit (10) is arranged for detecting a change in properties of the received transducer signals.

4. The device according to claim 3, wherein the processing unit (10) is arranged for detecting a phase change of the received transducer signals by correlating newly received transducer signals and previously received transducer signals.

5. The device according to any of the preceding claims, wherein the communication unit (14) is arranged for relaying corrosion data via other corrosion detection devices (1', 1") to the remote station (20).

6. The device according to any of the preceding claims, wherein the communication unit (14) is arranged for wireless communication.

7. The device according to any of the preceding claims, further comprising a transmission unit (12) for transmitting transducer signals to first transducer units (4) and receiving transducer signals from second transducer units (5).

8. The device according to claim 7, wherein the transmission unit (12) is arranged for causing the first transducer units (4) to periodically transmit ultrasonic waves.

9. The device according to claim 8, wherein a period between transmissions is determined in dependence on the corrosion data.

10. A corrosion detection system (100) comprising:
• one or more first ultrasonic transducer units (4) for transmitting ultrasonic waves along a surface (3) of an object (2),
• one or more second ultrasonic transducer units (5) for receiving the transmitted ultrasonic waves and producing corresponding transducer signals, and
• a corrosion detection device (1) according to any of the preceding claims.

11. A corrosion monitoring system comprising at least one corrosion detection system (100) according to claim 10 and at least one remote station (20).

12. A corrosion detection method comprising the steps of:
• transmitting ultrasonic waves, from first ultrasonic transducer units (4) to second ultrasonic transducer units (5), along a surface (3) of an object (2),
• processing transducer signals to detect corrosion of the surface (3) and producing corresponding corrosion data, and
• communicating the corrosion data to a remote station (20),
wherein the step of communicating the corrosion data is carried out only if the detected corrosion exceeds a threshold.

13. The method according to claim 12, wherein the processing step involves detecting a change in properties of the received transducer signals.

14. The method according to claim 13, wherein detecting a change in properties involves detecting a phase change by correlating newly received transducer signals and previously received transducer signals, said transducer signals preferably representing ultrasonic waves.

15. A computer program product for carrying out the processing and producing step in the method according to any of claims 12-14.
